(19) **Europäisches Patentamt European Patent Office Office européen des brevets**

(11) **EP 2 614 873 B1**

(12) **EUROPEAN PATENT SPECIFICATION**

(45) Date of publication and mention of the grant of the patent:
**16.11.2022 Bulletin 2022/46**

(21) Application number: **13150462.3**

(22) Date of filing: **08.01.2013**

(51) International Patent Classification (IPC):
**B01D 46/24** *(2006.01)*     **F01N 3/022** *(2006.01)*

(52) Cooperative Patent Classification (CPC):
**B01D 46/247; B01D 46/2429; B01D 46/24491; B01D 46/2474; B01D 46/2482; B01D 46/2484; F01N 3/0222;** B01D 2279/30; F01N 2330/34; F01N 2330/60; Y02T 10/12

(54) **HONEYCOMB FILTER**

WABENFILTER

FILTRE EN NIDS D'ABEILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2012 JP 2012002358**

(43) Date of publication of application:
**17.07.2013 Bulletin 2013/29**

(73) Proprietor: **NGK Insulators, Ltd.**
**Nagoya-city, Aichi 467-8530 (JP)**

(72) Inventors:
• **Mizutani, Takashi**
**Nagoya city, Aichi 467-8530 (JP)**
• **Iwasaki, Shingo**
**Nagoya city, Aichi 467-8530 (JP)**

(74) Representative: **Mewburn Ellis LLP**
**Aurora Building**
**Counterslip**
**Bristol BS1 6BX (GB)**

(56) References cited:
**WO-A1-2011/125769     WO-A1-2011/125770**

**Description**

TECHNICAL FIELD

The present invention relates to a honeycomb filter.

BACKGROUND ART

One proposed honeycomb filter includes a porous partition portion and a layer for trapping and removing particulate matter (hereinafter also referred to as PM) contained in an exhaust gas disposed on the partition portion. The porous partition portion is formed such that inlet cells that are open at one end and sealed at the other end and have a polygonal cross-section and outlet cells that are sealed at one end and open at the other end are alternately disposed (see, for example, Patent Literature 1). This honeycomb filter can trap PM using the trapping layer with low pressure loss.

CITATION LIST

PATENT LITERATURE

[PTL 1] Japanese Unexamined Patent Application Publication No. 2010-214335
WO 2011/125769 describes a honeycomb filter is formed in a manner such that cells that are fluid ducts and of which one end is open and the other end is sealed, and cells of which one end is sealed and the other end is open, are disposed in alternation. In the honeycomb filter, side collector layers are formed at the side partitions that form the sides of polygonal cells, and corner collector layers are formed at the corner partitions that form the corners of the polygonal cells, and the collector layer thickness ratio Y/X, which is the ratio of the thickness (Y) of the corner collector layers to the thickness (X) of the side collector layers, is formed to be at least 1.1 and no more than 2.4. In this way, the corner collector layers are formed thicker than the side collector layers.

DISCLOSURE OF INVENTION

However, in such a honeycomb filter in which inlet cells having a polygonal cross section and outlet cells are alternately disposed, the permeation resistance when a fluid flows is higher at corners than that at sides of a polygon. With an increase in deposition of PM on a trapping layer of the sides, the permeation resistance of the trapping layer of the sides increases, and thus the flow rate in the corners relatively increases as compared with that before the PM is deposited on the sides. The increase in the flow rate in the corners having a high permeation resistance results in a problem in that pressure loss in the trapping layer after the PM is deposited on the sides is increased on the whole.
It is a principal object of the present invention to provide a honeycomb filter that has reduced pressure loss.
In order to achieve the principal object, the present invention has employed the following means.
A honeycomb filter as set out in claim 1.
According to this honeycomb filter, since a corner trapping layer has a high porosity region, the permeation resistance of the corner trapping layer is lower than that in the case where the high porosity region is not provided. Specifically, the permeation resistance when a fluid passes through the corner trapping layer and a corner of a cell decreases. Consequently, for example, in the case where solid components are deposited on the side trapping layer and the flow rate of the fluid passing through the corner trapping layer and the corner of the cell becomes higher than that before the deposition, pressure loss in the corner trapping layer is further decreased and pressure loss in the trapping layer can be further decreased on the whole. Note that it is sufficient that the high porosity region is present on at least one of corner trapping layers among corner trapping layers formed on partition portions forming a plurality of corners of the polygon of a cell.
In the honeycomb filter of the present invention, a porosity ratio F may be 5% or more, the porosity ratio F being calculated by the following formula:

$$F = (B-A)/A \times 100 \ (unit: \%)$$

wherein a porosity B represents the porosity of the high porosity region and a porosity A represents the porosity of the side trapping layer. In this case, the permeation resistance of the corner trapping layer can be more reliably decreased, and thus the effect of reducing pressure loss can be more reliably obtained. The porosity ratio F is preferably at least 10%, more preferably at least 30%, and still more preferably at least 50%.

In the honeycomb filter of the present invention, the thickness of the high porosity region is more than 0% and 40% or less of the thickness of a region of the corner trapping layer, the region being other than the high porosity region. In the case where this ratio is more than 0%, for example, when a stress is applied to the trapping layer due to a temperature distribution generated by a regeneration treatment in which solid components are burned, the high porosity region particularly functions as a buffer of a compressive stress applied to the corner trapping layer. Thus, the generation of cracks in the trapping layer due to a stress can be more reliably suppressed. In the case where this ratio is 40% or less, for example, even when a stress is applied to the trapping layer due to a temperature distribution generated by a regeneration treatment in which solid components are burned, detachment of the trapping layer does not easily occur. The thickness of the high porosity region and the thickness of a region of the corner trapping layer, the region being other than the high porosity region, are each a thickness on a central axis of the corner trapping layer on a cross section orthogonal to the flow path of a cell. The thickness of the high porosity region is preferably 5% or more, more preferably 10% or more, still more preferably 20% or more, and particularly preferably 25% or more of the thickness of a region of the corner trapping layer, the region being other than the high porosity region. The thickness of the high porosity region may be 35% or less or 30% or less of the thickness of a region of the corner trapping layer, the region being other than the high porosity region.

In the honeycomb filter of the present invention, the region in which the high porosity region is disposed is represented by a region having a length ratio N, the length ratio N being a ratio of: the length from the sealed end on the outlet side to the position closest to the open end of the first cell at which the high porosity region is disposed to the total length from the open end of the first cell to the sealed end on the outlet side. The length ratio N may be a value of more than 0% and 40% or less. When a fluid flows from an open end, solid components tend to be deposited on the side trapping layer located at a position closer to a sealed end on the outlet side as compared with the open end. Therefore, when the length ratio N is controlled to be more than 0% and 40% or less so that the high porosity region is formed in the corner trapping layer located closer to the sealed end, the effect of reducing pressure loss in the corner trapping layer can be more reliably obtained. The length ratio N is preferably a value of 3% or more, more preferably a value of 5% or more. The length ratio N is preferably a value of 35% or less, more preferably a value of 30% or less. Note that the high porosity region is not necessarily present over the entire area of the length ratio N from the sealed end, the area being specified as the present area of the high porosity region. For example, when the present area of the high porosity region is an area of the length ratio N (= 40%) from the sealed end, the high porosity region may not be present in the range of 35% to 37%. In other words, the position represented by the length ratio N may be a position of the high porosity region that is present at a position closest to the open end of the cell.

In the honeycomb filter of the present invention, the partition portions, the trapping layer, or the partition portions and the trapping layer may be loaded with a catalyst. In this case, for example, an effect of purifying unburned gas contained in a fluid by burning can be obtained.

In the honeycomb filter of the present invention, the partition portions may further form a plurality of second cells, the second cells each being sealed at one end and open at the other end and serving as a flow path of a fluid, such that the first cells and the second cells are sealed at opposite ends, the first and second cells being adjacent to each other with portions of the partition portions disposed therebetween, the portions forming the sides of polygons of the first cells. In this honeycomb filter, the permeation resistance when a fluid flows is higher in a partition portion forming a corner than in a partition portion forming a side of the polygon of each of the first cells. Accordingly, the significance of application of the present invention is high.

In this case, the first cells may each have an opening area of the one end larger than an opening area of the other end of each of the second cells. With this structure, when the first cell is arranged on the inlet side of a fluid and the second cell is arranged on the outlet side of the fluid, a difference in the flow rate between the inlet and the outlet can be further reduced to increase an effect of trapping solid components on the trapping layer.

BRIEF DESCRIPTION OF DRAWINGS

Fig. 1 is an explanatory view showing an example of a schematic structure of a honeycomb filter 20;
Fig. 2 is an explanatory view of a cell, a partition, and a trapping layer;
Fig. 3 is an explanatory view showing the present area of a high porosity region of a trapping layer;
Fig. 4 is an explanatory view of a high porosity region of a corner trapping layer on the basis of SEM observation;
Fig. 5 is an explanatory view showing another shape of a large cell 23;
Fig. 6 is an explanatory view showing another shape of a large cell 23;
Fig. 7 is an explanatory view showing an example of a schematic structure of a honeycomb filter 40;
Fig. 8 includes cross-sectional photographs of inlet cells of Experimental Examples 4 and 22;
Fig. 9 shows measurement results of pressure loss after PM deposition and a purification efficiency after a durability test as a function of a length ratio N;

Fig. 10 shows measurement results of pressure loss after PM deposition and a purification efficiency after a durability test as a function of a thickness ratio T; and

Fig. 11 shows measurement results of pressure loss after PM deposition and a purification efficiency after a durability test as a function of a porosity ratio F.

BEST MODE FOR CARRYING OUT THE INVENTION

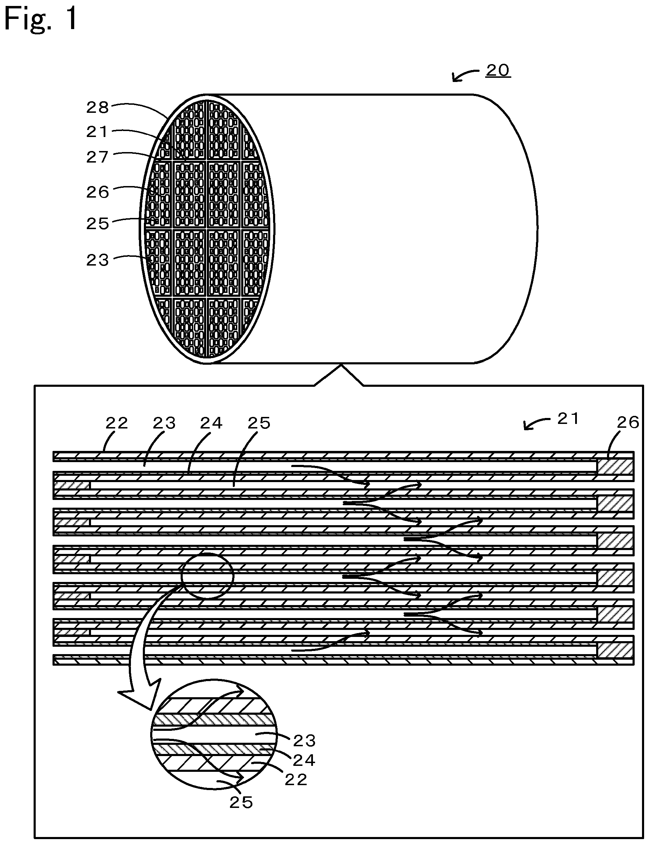

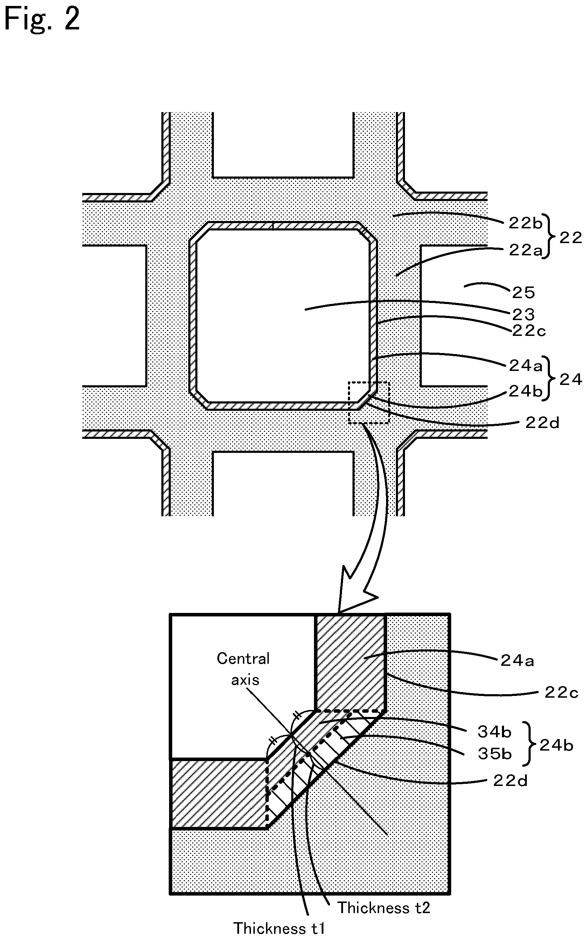

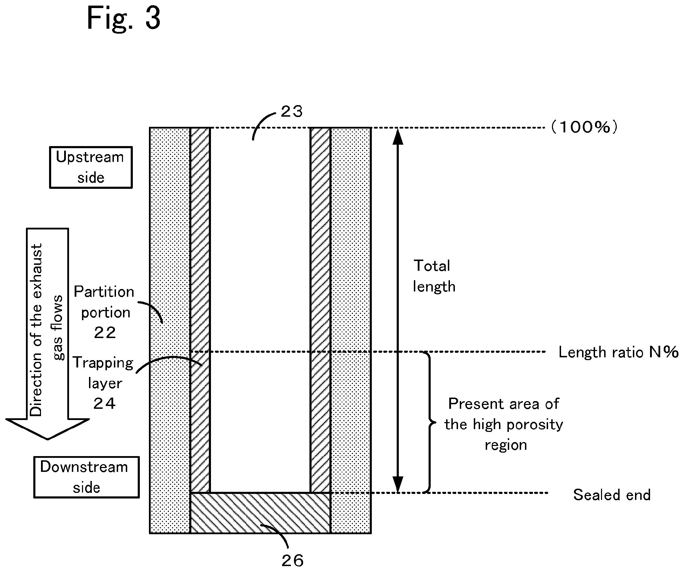

A honeycomb filter according to an embodiment of the present invention will be described with reference to the drawings. Fig. 1 is an explanatory view showing an example of a schematic structure of a honeycomb filter 20 according to an embodiment of the present invention. Fig. 2 is an explanatory view of a cell, a partition, and a trapping layer. Fig. 3 is an explanatory view showing the present area of a high porosity region of a trapping layer. In the honeycomb filter 20 according to the present embodiment, as illustrated in Fig. 1, two or more honeycomb segments 21 which include partition portions 22 are joined together with a bonding layer 27, and an outer protective portion 28 is disposed around the honeycomb segments 21.

The honeycomb filter 20 includes small cells 25, each of the cells being open at one end and sealed at the other end and serving as a flow path of a fluid, and large cells 23, each of the cells being sealed at one end and open at the other end and having an opening area larger than that of the small cells 25. In this honeycomb filter 20, the large cells 23 are inlet cells of an exhaust gas as a fluid, the small cells 25 are outlet cells of the exhaust gas, and a trapping layer 24 is formed on an inner wall of each of the large cells 23. The honeycomb filter 20 includes a plurality of porous partition portions 22 constituting the large cells 23 and the small cells 25, and a trapping layer 24 for trapping and removing solid components (PM) contained in the exhaust gas, the trapping layer being disposed on each of the partition portions 22 and composed of particle groups including particles having an average particle size smaller than the average pore size of the corresponding partition portion 22. In the honeycomb filter 20, the partition portions 22 are formed such that a large cell 23 that is open at one end and sealed at the other end and a small cell 25 that is sealed at one end and open at the other end are alternately disposed. In the honeycomb filter 20, as illustrated in Fig. 2, the large cells 23 and the small cells 25 are arranged so as to be adjacent to each other, and the large cells 23 are arranged so as to be adjacent to each other. In the honeycomb filter 20, a partition between a large cell and a small cell is referred to as a "partition 22a between large-small cells", a partition between a large cell and a large cell is referred to as a "partition 22b between large-large cells", a partition disposed on the large cell 23 side of the partition 22a between large-small cells and constituting a side of the large cell 23 is referred to as a "side partition 22c", and a partition disposed on the large cell 23 side of the partition 22b between large-large cells and constituting a corner of the large cell 23 is referred to as a "corner partition 22d". These partitions are collectively referred to as "partition portions 22". A trapping layer formed on the side partition 22c is referred to as a "side trapping layer 24a", and a trapping layer formed on the corner partition 22d is referred to as a "corner trapping layer 24b". These trapping layers are collectively referred to as "trapping layers 24". In the honeycomb filter 20, an exhaust gas that enters from the inlet side to a large cell 23 passes through the trapping layer 24 and the partition portion 22, and is discharged from a small cell 25 on the outlet side during which PM contained in the exhaust gas is trapped on the trapping layer 24. In addition, the large cell 23 having a large opening area is arranged on the inlet side and the small cell 25 having a small opening area is arranged on the outlet side, whereby a difference in the flow rate between the inlet and the outlet can be further reduced to increase the effect of trapping PM on the trapping layer 24. The average particle size of the particle groups constituting the trapping layer 24 is a mean value determined by observing the trapping layer 24 with a scanning electron microscope (SEM) and measuring the size of the individual particles of the trapping layer 24 in the image obtained. The average particle size of raw material particles is a median size (D50) determined by measuring the size of raw material particles with a laser diffraction/scattering particle size distribution analyzer using water as a dispersion medium.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a polygonal columnar (quadrangular prismatic, hexagonal columnar, or the like) cross section. A cross section of the cell, the cross section being orthogonal to the flow path of the exhaust gas, may be polygonal, such as triangular, tetragonal, hexagonal, or octagonal or combination thereof. Figs. 1 and 2 show an example in which the external shape of the honeycomb filter 20 is cylindrical, the external shape of each of the honeycomb segments 21 is rectangular columnar, a cross section of each of the large cells 23, the cross section being perpendicular to a direction in which the exhaust gas flows, is a shape obtained by cutting off the corners of a quadrangle, and a cross section of each of the small cells 25, the cross section being perpendicular to a direction in which the exhaust gas flows, is a quadrangle.

The partition portions 22 are porous and may contain one or more inorganic materials selected from cordierite, Si-bonded SiC, recrystallized SiC, aluminum titanate, mullite, silicon nitride, sialon, zirconium phosphate, zirconia, titania, alumina, and silica. Among these, cordierite, Si-bonded SiC, and recrystallized SiC are preferred. Each of the partition portions 22 preferably has a porosity of 30% by volume or more and 85% by volume or less, more preferably 35% by volume or more and 65% by volume or less. Herein, the term "porosity" refers to a measurement result obtained by a mercury intrusion method. The partition portion 22 preferably has an average pore size of 10 $\mu$m or more and 60 $\mu$m or less. Herein, the term "average pore size" refers to a measurement result obtained by a mercury intrusion method. The partition portion 22 preferably has a thickness of 150 $\mu$m or more and 600 $\mu$m or less, more preferably 200 $\mu$m or more and 400 $\mu$m or less. When the thickness is 150 $\mu$m or more, the mechanical strength can be increased. When the thickness is 600 $\mu$m or less, pressure loss can be further reduced. The partition portion 22 having such a porosity, an average pore size, and a thickness allows an exhaust gas to easily pass through the partition portions 22 and PM to be easily trapped and removed.

As illustrated in the enlarged view of Fig. 2, the trapping layer 24 has a high porosity region 35b having a porosity higher (i.e., density lower) than that of the side trapping layer 24a, the high porosity region 35b being disposed on the corner partition 22d side of the corner trapping layer 24b. A region of the corner trapping layer 24b, the region being other than the high porosity region 35b, is referred to as "non-high-porosity region 34b". By providing this high porosity region 35b, the permeation resistance of the corner trapping layer 24b can be made lower than that of a corner trapping layer that does not have the high porosity region 35b. Specifically, the permeation resistance when an exhaust gas passes through the corner trapping layer 24b and the corner partition 22d decreases. Consequently, for example, in the case where PM is deposited on the side trapping layer 24a and the flow rate of the exhaust gas that passes through the corner trapping layer 24b and the corner partition 22d becomes higher than the flow rate before the deposition, pressure loss in the corner trapping layer 24b is further decreased and pressure loss in the trapping layer 24 can be further decreased on the whole. When an exhaust gas flows from an open end of a large cell 23, PM tends to be deposited on a side trapping layer 24a located at a position closer to a sealed end as compared with the open end. Therefore, when the high porosity region 35b is formed in the corner trapping layer 24b located closer to the sealed end, the effect of reducing pressure loss in the corner trapping layer 24b can be more reliably obtained. Accordingly, as illustrated in Fig. 3, when the present area of the high porosity region 35b is represented by an area of a length ratio N (unit: %) from a sealed end on the outlet side relative to a total length from an open end of a large cell 23, which is an inlet end of an exhaust gas, to the sealed end of the large cell 23, which is an outlet end, the length ratio N is preferably a value of more than 0% and 40% or less. The length ratio N represents a ratio of a length from a position closest to the upstream side of the exhaust gas, the position being located in an area where the high porosity region 35b is provided, to the sealed end on the outlet side to the total length. For example, the phrase "the length ratio N is 40%" means that the present area of the high porosity region 35b is an area from a sealed end on the outlet side to a position shifted toward the upstream side by 40% of the total length. The length ratio N is preferably a value of 3% or more, more preferably a value of 5% or more. The length ratio N may be a value of more than 40%. However, the length ratio N is preferably a value of 40% or less, more preferably a value of 35% or less, and still more preferably a value of 30% or less. Note that the high porosity region 35b is not necessarily present over the entire area of the length ratio N from the sealed end, the area being specified as the present area of the high porosity region 35b. The high porosity region 35b may not be present in a part of the area.

In the region of the trapping layer 24, the region being other than the high porosity region 35b, the average pore size is preferably 0.2 $\mu$m or more and 10 $\mu$m or less, and the porosity is preferably 40% by volume or more and 95% by volume or less. The average particle size of particles constituting the trapping layer 24 is preferably 0.5 $\mu$m or more and 15 $\mu$m or less. When the average pore size is 0.2 $\mu$m or more, an excessive initial pressure loss in the absence of PM deposition can be suppressed. When the average pore size is 10 $\mu$m or less, a satisfactory PM trapping efficiency can be obtained, it is possible to suppress PM from entering the pore through the trapping layer 24, and an increase in pressure loss during PM deposition can be suppressed. When the porosity is 40% by volume or more, an excessive initial pressure loss in the absence of PM deposition can be suppressed. When the porosity is 95% by volume or less, a surface layer serving as a durable trapping layer 24 can be formed. When the average particle size of particles constituting the trapping layer 24 is 0.5 $\mu$m or more, a space between the particles constituting the trapping layer 24 can be sufficiently provided, thus maintaining permeability of the trapping layer 24 and suppressing a sudden increase in pressure loss. When the average particle size of particles constituting the trapping layer 24 is 15 $\mu$m or less, there are a sufficient number of points of contact between the particles, thus ensuring a sufficient bond strength between the particles and a high peel strength of the trapping layer 24. Thus, it is possible to maintain a high PM trapping efficiency, prevent a sudden increase in pressure loss immediately after the start of PM trapping, decrease pressure loss during PM deposition, and impart durability to the trapping layer.

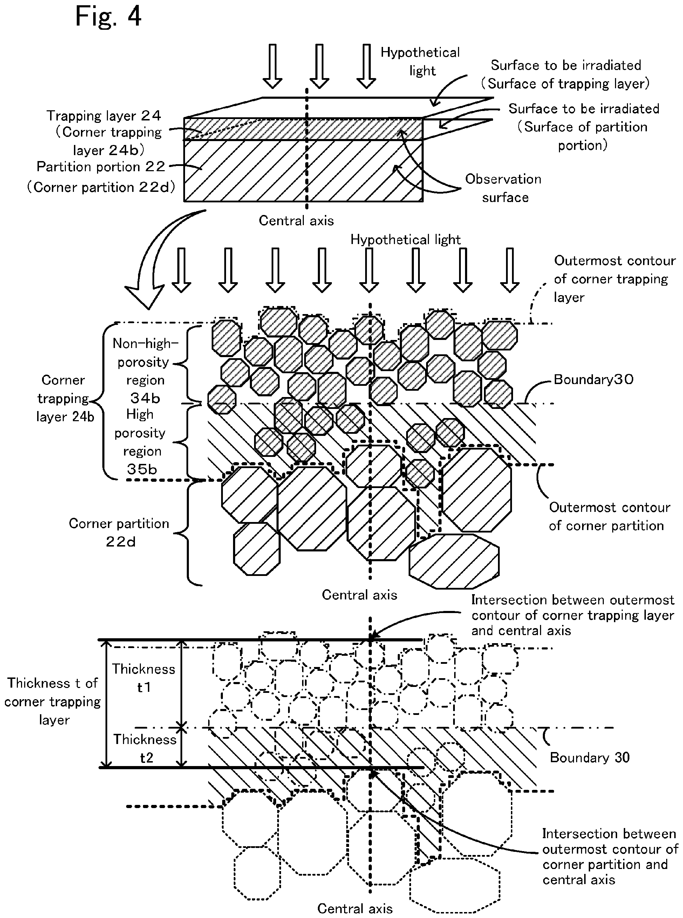

The high porosity region 35b will now be described with reference to Fig. 4. Fig. 4 is an example of an image (SEM image) obtained by embedding a partition substrate of the honeycomb filter 20 in a resin and then polishing the resin to prepare a sample for observation, and performing scanning electron microscope (SEM) observation. This image can be obtained as follows. First, the sample for observation is prepared by cutting and polishing the sample such that a cross section perpendicular to a direction in which the fluid flows serves as an observation surface. The observation surface of the sample for observation prepared is photographed at measuring points described below in a visual field

of approximately 500 $\mu$m $\times$ 500 $\mu$m at a SEM magnification in the range of 100 to 500. Thus, the image shown in Fig. 4 is obtained. The definition of the high porosity region 35b in this image will be described. First, the outermost contour of a partition portion 22 (corner partition 22d) is hypothetically drawn on the image obtained. The outermost contour of the corner partition is a line showing the outline of the corner partition 22d and refers to a projector obtained by irradiating a corner partition surface (a surface to be irradiated, see the top in Fig. 4) with hypothetical parallel light from the direction perpendicular to the corner partition surface (see the middle of Fig. 4). Specifically, the outermost contour of a corner partition is composed of line segments corresponding to a plurality of top surfaces of the corner partition at different levels irradiated with hypothetical light and perpendicular lines each connecting line segments corresponding to adjacent top surfaces of the corner partition at different levels. The line segments corresponding to the top surfaces of the corner partition are drawn at "5% resolution", in which, for example, asperities having a length of 5 $\mu$m or less are disregarded with respect to a line segment having a length of 100 $\mu$m. This prevents the occurrence of too many line segments in the horizontal direction. In the drawing of the outermost contour of a corner partition, the presence of a trapping layer 24 (corner trapping layer 24b) is disregarded. Subsequently, in the same manner as in the outermost contour of a corner partition, the outermost contour of a corner trapping layer is hypothetically drawn. The outermost contour of the corner trapping layer is a line showing the outline of the particle groups constituting the surface of the corner trapping layer 24b and refers to a projector obtained by irradiating a corner trapping layer surface (a surface to be irradiated, see the top in Fig. 4) with hypothetical parallel light from the direction perpendicular to the corner trapping layer surface (see the middle of Fig. 4). Specifically, the outermost contour of the corner trapping layer is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the top surfaces of the corner partition. For a highly porous trapping layer 24, in a sample for observation prepared by embedding a substrate in a resin and polishing, some particle groups are observed as if they floated in the air. The outermost contour is therefore drawn with the projector obtained by hypothetical parallel light irradiation. Subsequently, a boundary 30 between the non-high-porosity region 34b and the high porosity region 35b in the corner trapping layer 24b is hypothetically drawn (see the middle of Fig. 4). The boundary 30 is a line determined as a height at which, when the thickness direction of the corner trapping layer is defined as a height direction, a change in the density of the corner trapping layer is the maximum with respect to the height direction of the corner trapping layer. The boundary 30 is drawn as follows. First, values that represent the density of each pixel of the captured SEM image are summed up in a direction (the horizontal direction in Fig. 4) perpendicular to the height direction of the corner trapping layer 24b. Thus, the total density is determined for each height of the corner trapping layer 24b. Next, a point at which a change in the total density with respect to the height direction is the maximum (point at which a derivative value is the maximum when the total density is differentiated) is determined, and the boundary 30 is drawn at a height of the point. In a SEM image, a pixel where a particle is present has a high density (is blight), and a pixel where no particle is present has a low density (is dark). Therefore, the boundary 30 between the non-high-porosity region 34b and the high porosity region 35b is determined as described above. A region between the boundary 30 and the outermost contour of the corner partition is defined as the high porosity region 35b, and a region between the boundary 30 and the outermost contour of the corner trapping layer is defined as the non-high-porosity region 34b (see the middle of Fig. 4). As illustrated in the enlarged view of Fig. 2, on a cross section orthogonal to the flow path of a cell, a thickness of the non-high-porosity region 34b on a central axis of the corner trapping layer 24b is defined as a thickness t1, and a thickness of the high porosity region 35b on the central axis of the corner trapping layer 24b is defined as a thickness t2. Specifically, the distance from an intersection (see the bottom of Fig. 4) between the central axis (see the enlarged figure of Fig. 2 and Fig. 4) of the corner trapping layer 24b on a cross section orthogonal to the flow path of a cell and the outermost contour of the corner trapping layer to the boundary 30 is defined as a thickness t1 of the non-high-porosity region 34b. Similarly, the distance from an intersection (see the bottom of Fig. 4) between the central axis and the outermost contour of the corner partition to the boundary 30 is defined as a thickness t2 of the high porosity region 35b. The sum of the thickness t1 and the thickness t2 is defined as a thickness t of the corner trapping layer 24b.

The thickness t2 of the high porosity region 35b is more than 0% and 40% or less of the thickness t1 of the non-high-porosity region 34b. Specifically, a thickness ratio T = t2/t1 $\times$ 100 (unit: %) is more than 0% and 40% or less. At a thickness ratio T of more than 0%, for example, in the case where a stress is applied to the trapping layer 24 due to a temperature distribution generated by a regeneration treatment in which PM is burned, the high porosity region 35b particularly functions as a buffer of a compressive stress applied to the corner trapping layer 24b. Thus, the generation of cracks in the trapping layer 24 due to a stress can be more reliably suppressed. At a thickness ratio T of 40% or less, for example, even in the case where a stress is applied to the trapping layer 24 due to a temperature distribution generated by a regeneration treatment in which PM is burned, detachment of the trapping layer 24 does not easily occur. By increasing the thickness ratio T to 5% or more, 10% or more, and 20% or more, the effect of the high porosity region 35b that functions as a buffer of a compressive stress applied to the corner trapping layer 24b is increased. By decreasing the thickness ratio T to 35% or less, 30% or less, and 25% or less, the effect of suppressing detachment of the trapping layer 24 is increased.

In the trapping layer 24, the porosity of the high porosity region 35b is preferably higher than the porosity of the side trapping layer 24a by 5% or more because the permeation resistance of the corner trapping layer 24b can be more reliably reduced and the above-described effect of reducing pressure loss can be reliably obtained. Specifically, porosity ratio $F = (B - A)/A \times 100$ (unit: %) is preferably 5% or more, wherein a porosity B represents the porosity of the high porosity region 35b and a porosity A represents the porosity of the side trapping layer 24a. The porosity ratio F is more preferably 10% or more, still more preferably 30% or more, and particularly preferably 50% or more. Furthermore, the porosity B may be 100%. Specifically, particles that constitute the trapping layer 24 may not be present in the high porosity region 35b. In this case, the permeation resistance of the corner trapping layer 24b can be further decreased. The porosity B is determined as follows. First, the SEM image of the observation surface shown in Fig. 4 is binarized so that pixels in the SEM image are classified into particle portions and non-particle portions. The porosity B is determined by dividing the number of pixels of the non-particle portions in the high porosity region 35b by the total number of pixels (the sum of the number of pixels of the particle portions and the number of pixels of the non-particle portions). The porosity A is determined as follows. First, a SEM image in which an observation surface includes the side trapping layer 24a and the partition portion 22, the SEM image being similar to that shown in Fig. 4, is prepared. Next, an outermost contour of a side trapping layer is drawn as in the outermost contour of the corner trapping layer, and an outermost contour of a partition portion is drawn as in the outermost contour of the corner partition. Subsequently, a region between the outermost contour of the side trapping layer and the outermost contour of the partition portion is defined as the side trapping layer 24a. The porosity A is determined by dividing the number of pixels of the non-particle portions in the side trapping layer 24a by the total number of pixels (the sum of the number of pixels of the particle portions and the number of pixels of the non-particle portions) as in the porosity B.

The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. More preferably, the trapping layer 24 contains 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite.

The raw material for the trapping layer 24 may be inorganic fiber or inorganic particles. The inorganic fiber may be that described above and preferably has an average particle size of 0.5 $\mu$m or more and 8 $\mu$m or less and an average length of 100 $\mu$m or more and 500 $\mu$m or less. The inorganic particles may be particles made of the inorganic material described above. For example, SiC particles or cordierite particles having an average particle size of 0.5 $\mu$m or more and 15 $\mu$m or less can be used. In this case, the inorganic material of the partition portion 22 is preferably the same as the inorganic material of the trapping layer 24. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell 23 using a slurry containing inorganic particles serving as the raw material of the trapping layer 24.

The high porosity region 35b may be formed by using a high porosity region forming member that can be removed later. For example, a fluid (such as gas) is used as a transport medium of the high porosity region forming member. The fluid containing the high porosity region forming member is supplied from an opening of a large cell 23 and deposited on a corner partition 22d that constitutes corners of a polygon of the large cell 23. A trapping layer 24 is then formed thereon and the high porosity region forming member is removed. Thus, the high porosity region 35b can be formed. In this method, for example, the formation region of the high porosity region forming member, the thickness t2, the porosity B, etc. can be adjusted by appropriately changing the flow rate, the amount of volume, the average particle size, the particle size distribution, the material, the rate of supply, etc. of the high porosity region forming member. Furthermore, the formation region of the supplied high porosity region forming member can be controlled by increasing the permeation resistance of the fluid by incorporating an alcohol, water, a resin, or the like in a predetermined region of the partition portion 22, for example, an upstream region or a downstream region of the honeycomb filter 20 (honeycomb segments 21). The fluid serving as the transport medium is preferably gas such as air or nitrogen gas. The high porosity region forming member may be, for example, a material that is burned out by heat treatment, a material that dissolves in a solvent, or the like. Among these, a material that is burned out by heat treatment is more preferred. This is because baking of the trapping layer 24 and formation of the high porosity region 35b can be performed at the same time and the production process can be simplified. Examples of the material that is burned out by heat treatment include carbon particles such as carbon black particles, graphite particles, and coke particles; starch particles; cellulose particles; powder sugar; and resin particles such as polyethylene particles, polypropylene particles, acrylic particles, nylon particles, and phenolic particles. Among these materials, materials that are burned out at lower temperatures are preferred. For example, carbon black particles and starch particles are preferred. The high porosity region forming member is preferably particles having a particle size smaller than the size of the pore of the partition portion 22. For example, the particle size of the high porosity region forming member is preferably 0.001 times or more and 0.50 times or less, more preferably 0.01 times or more and 0.40 times or less the average pore size of the partition portion 22. The high porosity region forming member preferably has an average particle size of 0.01 μm or more and 20 μm or less, more preferably 0.1 μm or more and 12 μm or less. When a fluid is supplied to a large cell 23, the fluid may be supplied from the inlet side under pressure, and the pressure on the outlet side may be reduced. After the high porosity region forming member is deposited on the corner partition 22d, a removal treatment is conducted to remove the high porosity region forming member. When a high porosity region forming member that is burned out by heat treatment is used, the heat treatment temperature is preferably, for example, in a temperature range of 400°C or higher and 1,000°C or lower in an oxidizing atmosphere. In this step, for example, when the formation of the trapping layer 24 described below and the formation of the high porosity region 35b are conducted at the same time, the trapping layer 24 may be formed in a temperature range of 650°C or higher and 1,350°C or lower. Thus, the high porosity region 35b can be formed by a relatively easy method using the high porosity region forming member. The method for forming the high porosity region forming member is not limited to the method described above. For example, a slurry containing a high porosity region forming member may be introduced into a large cell 23, and the high porosity region forming member may be formed on the surface of the partition portion 22 and near a sealing portion 26. As for a method for depositing the high porosity region forming member on the corner partition 22d, for example, surfaces of outlet cells (small cells 25) are coated with a coating agent in advance so that gas does not easily permeate from inlet cells to the outlet cells, and the high porosity region forming member may then be supplied from openings of the inlet cells. In this method, the high porosity region forming member may be supplied only to cells in every other row among the inlet cells. In this case, since the high porosity region forming member does not easily permeate from the inlet cells to the outlet cells due to the presence of the coating agent, the high porosity region forming member permeates from inlet cells to which the high porosity region forming member has been supplied to inlet cells to which the high porosity region forming member has not been supplied. Thus, the high porosity region forming member can be deposited on corner partitions constituting corners between inlet cells (between a large cell and a large cell), i.e., corner partitions constituting corners of polygons of inlet cells. Examples of the coating agent include a material that is burned out by heat treatment and a material that dissolves in a solvent. A material that is burned out by heat treatment is more preferable because baking of the trapping layer 24 and removal of the coating agent can be performed at the same time and the production process can be simplified. The coating agent may be the same as the high porosity region forming member.

A method for forming the trapping layer 24 may include supplying a fluid containing a raw material of the trapping layer to an inlet cell using a fluid as a transport medium for the raw material of the trapping layer. This is preferred because the particle groups constituting the trapping layer become coarser and can form a trapping layer having a high porosity. In this case, the trapping layer is more preferably formed after the high porosity region forming member is provided. The fluid serving as the transport medium is preferably gas such as air or nitrogen gas. The raw material of the trapping layer may be, for example, inorganic fiber or inorganic particles. The inorganic fiber may be that described above or fiber obtained from the inorganic material described above, and preferably has an average diameter of 0.5 μm or more and 8 μm or less and an average length of 100 μm or more and 500 μm or less. The inorganic particles may be particles composed of the inorganic material described above. For example, SiC particles or cordierite particles having an average particle size of 0.5 μm or more and 15 μm or less can be used. The raw material of the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials. In particular, colloidal silica is preferably used. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The trapping layer 24 is preferably bound to the partition portion 22 by forming a layer of the raw material on the partition portion 22 and then performing heat treatment. The heat treatment temperature is preferably, for example, 650°C or higher and 1,350°C or lower. Heat treatment at a temperature of 650°C or higher can ensure a sufficient bonding strength. Heat treatment at a temperature of 1,350°C or lower can suppress clogging of pores caused by excessive oxidation of the particles. A method for forming the trapping layer 24 may include, for example, forming a slurry containing inorganic particles serving as the raw material of the trapping layer 24 on a surface of the large cell 23.

Methods for measuring the length ratio N, the thicknesses t1 and t2, and the porosities A and B will be described. First, the method for measuring the length ratio N will be described. A honeycomb filter 20 that is a target of the measurement is cut so that the entire portion of the honeycomb filter 20 is divided into 40 equal portions with respect to the total length direction. Next, cut surfaces are polished to prepare 40 samples for observation each having a cross section perpendicular to a direction in which a fluid flows. On the cross section of each of the samples for observation, arbitrary five points including a central point and four points located on the left, right, top, and bottom of the central point are used as observation surfaces. Note that each of the observation surfaces is selected so as to include the central axis of the corner trapping layer 24b on the cross section orthogonal to the flow path of the cell. Subsequently, on each of the observation surfaces of the 40 samples for observation, the outermost contour of the corner partition, the outermost contour of the corner trapping layer, and the boundary 30 are hypothetically drawn by the methods described above. Next, whether or not the corner trapping layer has a high porosity region is examined on each of the observation surfaces. Specifically, for example, a difference between the porosity of a region between the boundary 30 and the outermost contour of the corner partition and the porosity of a region between the boundary 30 and the outermost contour of the corner trapping layer is determined. When this difference is equal to or more than a predetermined threshold (for example, several percent), the corner trapping layer of this observation surface is considered to have a high porosity region. The threshold is empirically determined in consideration of, for example, a variation in the porosity in the corner trapping layer in the case where the high porosity region is not formed, the measurement error, etc. For an observation surface that is considered to include the high porosity region, the thickness t2 is determined by the method described above. For an observation surface that cannot be considered to include the high porosity region, the thickness t2 is determined to be zero regardless of the position of the drawn boundary 30. Thus, the thicknesses t2 on the observation surfaces at the five positions in each of the samples for observation are determined, and the average thereof is determined to be the thickness t2 of the sample for observation. This procedure is conducted in the same manner for the 40 samples for observation. Next, a graph (including points) is drawn using the determined values of the thickness t2 in the samples for observation. In the graph, the vertical axis represents the thickness t2, and the horizontal axis represents the distance from a sealed end of a large cell 23 which is an end on the outlet side of an exhaust gas to the cross section of the sample for observation. Thus, points whose number corresponds to the number (40) of samples for observation are drawn. An approximation line based on the drawn points is drawn. The value of the thickness t2 on the approximation line is examined from the sealed end of the large cell 23, which is an end on the outlet side, to the open end of the large cell 23, which is an end on the inlet side, to specify a position at which the thickness t2 is changed from a value exceeding zero to a value of zero (position at which the approximation line contacts a straight line of thickness t2 = 0). The length ratio N is determined on the basis of the distance from the sealed end on the outlet side to this position. In the case where a plurality of positions at which the thickness t2 is changed from a value exceeding zero to a value of zero are present on the approximation line, the length ratio N is determined on the basis of a position closest to the inlet side of the large cell 23 (upstream side of an exhaust gas) among the positions.

Next, methods for measuring the thicknesses t1 and t2 and the porosities A and B will be described. First, among the above-described 40 samples for observation, one sample for observation having a cross section closest to a position shifted toward the upstream side by 10% of the total length from the downstream side (on the sealed end side) relative to the total length from the open end of the large cell 23, which is an end on the inlet side of an exhaust gas, to the sealed end of the cell 23, which is an end on the outlet side, is specified. The thicknesses t1 and t2 and the porosities A and B of this sample for observation are determined and used as the thicknesses t1 and t2 and the porosities A and B of the honeycomb filter 20 that is a target of the measurement. Note that each of the values of the thicknesses t1 and t2 and the porosity B is measured by the method described above on the observation surfaces of the five points of this sample for observation, and determined as an average. The value of the thickness t2 has been derived in determining the length ratio N described above, and thus the value may be used. The porosity A is determined as follows. First, observation surfaces of arbitrary five points including a central point in a cross section of this sample for observation and four points located on the left, right, top, and bottom of the central point are selected so that each of the observation surfaces includes a side trapping layer. The porosity of the side trapping layer is measured by the method described above on each of the observation surfaces of this five points, and the porosity A is determined as an average thereof. As described above, the thicknesses t1 and t2 and the porosities A and B in the sample for observation having a cross section closest to a position shifted toward the upstream side by 10% of the total length from the downstream side are measured and used as the thicknesses t1 and t2 and the porosities A and B of the honeycomb filter 20. This is because when a fluid permeates through a partition portion, the flow rate of the fluid is the highest near a position shifted toward the upstream side by 10% of the total length from the downstream side, and thus characteristics near this position most significantly contribute to the pressure loss performance.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 $\mu$m or more and 30 $\mu$m or less. The inorganic fiber may be that described above and preferably has an average diameter of 0.5 $\mu$m or more and 8 $\mu$m or less and an average length of 100 $\mu$m or more and 500 $\mu$m or less. The binding material may be colloidal silica or clay. The bonding layer 27 is preferably formed in the range of 0.5 mm or more and 2 mm or less. The average particle size is the median size (D50) measured with a laser diffraction/scattering particle size distribution analyzer using water as a dispersion medium. The outer protective portion 28 is a layer for protecting the periphery of the honeycomb filter 20 and may contain the inorganic particles, the inorganic fiber, and the binding material described above.

In the honeycomb filter 20, the thermal expansion coefficients of the honeycomb filter 20 at a temperature in the range of 40°C to 800°C in the longitudinal direction of the cells 23 are preferably $6.0 \times 10^{-6}$/°C or less, more preferably $1.0 \times 10^{-6}$/°C or less, still more preferably $0.8 \times 10^{-6}$/°C or less. At a thermal expansion coefficient of $6.0 \times 10^{-6}$/°C or less, thermal stress generated by exposure to a high-temperature exhaust gas can be within tolerance.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

In the honeycomb filter 20, the partition portion 22 or the trapping layer 24 may contain a catalyst. The catalyst may be at least one of catalysts for promoting the combustion of trapped PM, catalysts for oxidizing unburned gases (HCs, CO, and the like) contained in an exhaust gas, and catalysts for occluding/adsorbing/decomposing $NO_x$. The catalyst can increase the efficiency of removing PM, oxidizing unburned gases, or decomposing $NO_x$. The catalyst more preferably contains at least one of noble metal elements and transition metal elements. The honeycomb filter 20 may be loaded with another catalyst or a purification material. Among those are a $NO_x$ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing $NO_x$ can more highly purify an exhaust gas.

According to the above-described honeycomb filter 20 of the present embodiment, since the corner trapping layer 24b has the high porosity region 35b, the permeation resistance of the corner trapping layer 24b is lower than that in the case where the high porosity region 35b is not provided. Specifically, the permeation resistance when a fluid passes through the corner trapping layer 24b and a partition 22b between large-large cells, the partition 22b including the corner partition 22d, decreases. Consequently, for example, in the case where PM of an exhaust gas is deposited on the side trapping layer 24a and the flow rate of the exhaust gas passing through the corner trapping layer 24b and the partition 22b between large-large cells becomes higher than that before the deposition, pressure loss in the corner trapping layer 24b is further decreased and pressure loss in the trapping layer 24 can be further decreased on the whole. In addition, by controlling the ratio of the thickness t2 of the high porosity region 35b to the thickness t1 of the non-high-porosity region 34b to be a suitable range, for example, it is possible to obtain an effect of suppressing detachment of the trapping layer 24 when a stress is applied to the trapping layer 24 due to a temperature distribution generated by a regeneration treatment in which PM is burned, and an effect of further suppressing the generation of cracks due to a function of the high porosity region 35b as a buffer of a compressive stress applied to the corner trapping layer 24b.

It is apparent that the present invention is not limited to the above-described embodiment at all and various embodiments can be made within the technical scope of the present invention.

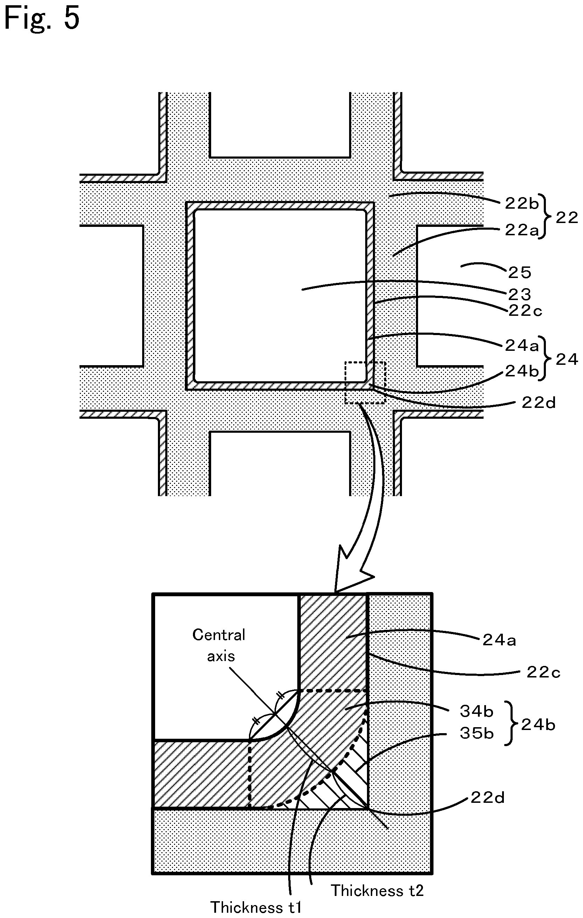

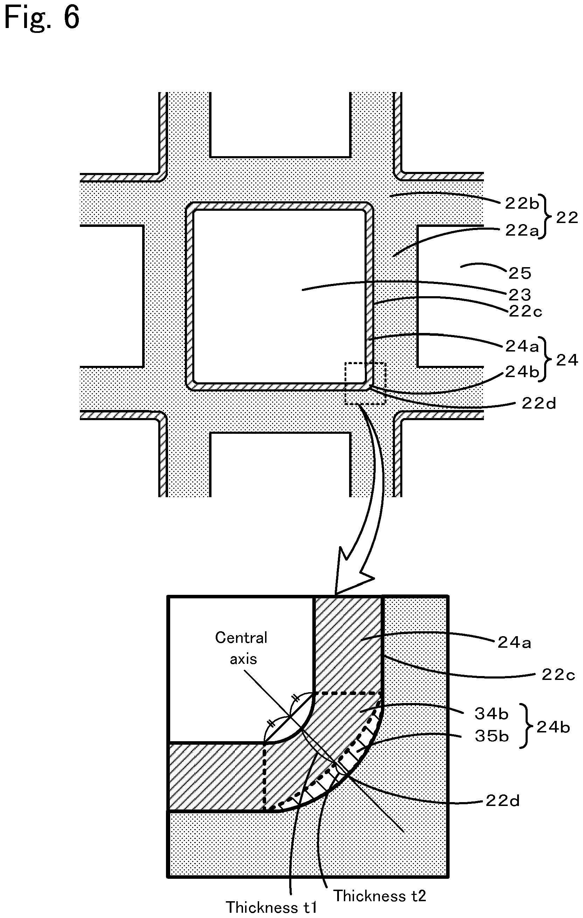

For example, in the embodiment described above, the partition portion 22 forms a large cell 23 such that a cross section of the large cell 23 is a shape obtained by cutting off the corners of a quadrangle, the cross section being perpendicular to a direction in which an exhaust gas flows. However, the cross section is not limited to the shape obtained by cutting off the corners of a quadrangle. For example, as illustrated in Fig. 5, the partition portion 22 may form a large cell 23 such that a cross section of the large cell 23 has a quadrangular shape, the corners of which have not been cut off. Alternatively, the corner partition 22d may have an arc shape. For example, as illustrated in Fig. 6, the partition portion 22 may form a large cell 23 such that a cross section of the large cell 23 is a quadrangle having arc-shaped corners.

In the above-described embodiment, the honeycomb filter includes a large cell 23 and a small cell 25 that have different sizes and shapes. Alternatively, the large cell 23 and the small cell 25 may have the same shape and the same size.

In the embodiment described above, as illustrated in Fig. 2, each of the corner trapping layers 24b on four corner partitions 22d that form corners of one cell has the high porosity region 35b. However, it is sufficient that the high porosity region 35b is present on at least one of the corner trapping layers 24b.

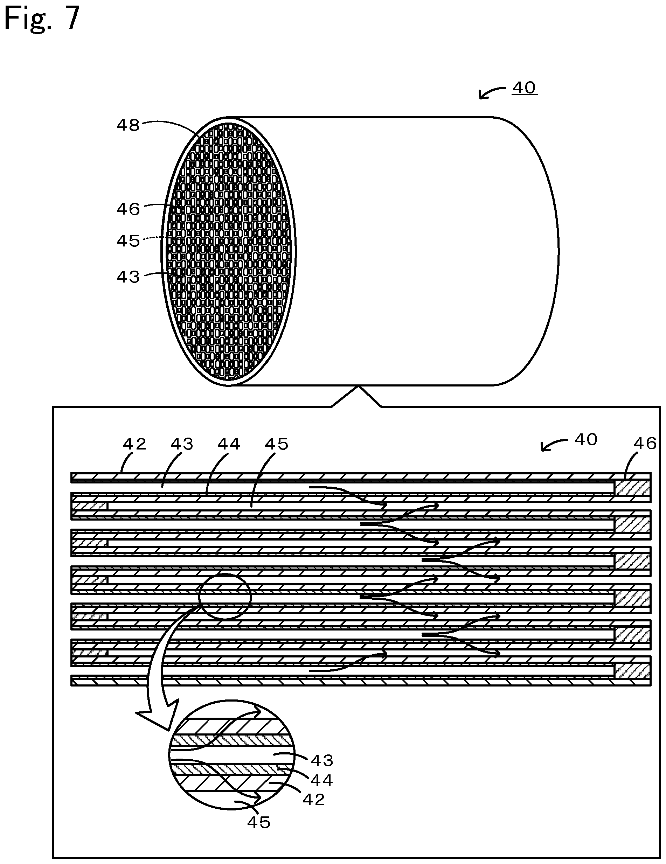

Although the honeycomb segments 21 are joined together with the bonding layer 27 in the honeycomb filter 20 according to the embodiment described above, an integrally formed honeycomb filter 40 is also suitable as illustrated in Fig. 7. In the honeycomb filter 40, partition portions 42, large cells 43, trapping layers 44, small cells 45, sealing portions 46, etc. may have the same structure as the partition portions 22, the large cells 23, the trapping layers 24, the small cell 25, and the sealing portions 26 of the honeycomb filter 20, respectively. This structure can also further reduce pressure loss and further improve durability of the trapping layer.

Although the honeycomb filter 20 according to the embodiment described above contains a catalyst, any honeycomb filter that can filter out substances to be removed in a fluid that flows is suitable. Alternatively, the honeycomb filter 20 may not contain a catalyst. Although the honeycomb filter 20 that traps PM contained in an exhaust gas has been described, any honeycomb filter for trapping and removing solid components contained in a fluid, such as honeycomb filters for power engines of construction equipment and honeycomb filters for factories and power plants, may be suitable.

Although the trapping layers 24 are formed only in the large cells 23 in the embodiment described above, the trapping layers 24 may further be formed in the small cells 25. However, it is preferable to form the trapping layers 24 only in the large cells 23 because pressure loss can be further reduced and the honeycomb filter can be easily prepared.

EXAMPLES

Specific experimental examples of the manufacture of a honeycomb filter will be described below. A honeycomb filter including honeycomb segments joined together was manufactured.

[Step of forming honeycomb segment]

A SiC powder and a metallic Si powder were mixed at a mass ratio of 80:20. The mixture was kneaded with methylcellulose, hydroxypropoxyl methylcellulose, a surfactant, and water to prepare a plastic pug. The pug was extruded through a certain die to form a honeycomb segment formed product having a desired shape. Next, the honeycomb segment formed product was dried using microwaves, was further dried with hot air, and was then sealed. Subsequently, the honeycomb segment formed product was calcined in an oxidizing atmosphere at 550°C for three hours, and was then baked in an inert atmosphere at 1,400°C for two hours. Sealing portions were formed by masking alternate cell openings of the segment formed product at one end face and immersing the masked end face in a sealing slurry containing a SiC raw material, thereby alternately forming openings and sealing portions. The other end face was masked in the same manner. Sealing portions were formed such that a large cell that was open at one end and sealed at the other end, the large cell being a cell on the exhaust-gas inlet side, and a small cell that was sealed at one end and open at the other end, the small cell being a cell on the exhaust-gas outlet side, were alternately disposed. The honeycomb segment was formed such that inlet cells and outlet cells were adjacent to each other with portions of partition portions disposed therebetween, the portions forming sides of polygons of the inlet cells. In this example, the honeycomb filter had a cross-sectional diameter of 144 mm and a length of 152 mm, a cell density of 46.5 cell/cm$^2$, a thickness of a partition between large-large cells of 0.31 mm, and a thickness of a partition between large-small cells of 0.31 mm. The inlet cell had a quadrangular cross-sectional shape, the corners of which were cut, and the length between partition portions of the inlet cell, the partition portions facing each other, was 1.36 mm. The outlet cell had a quadrangular cross-sectional shape, and the length between partition portions of the outlet cell, the partition portions facing each other, was 0.96 mm. The porosity of the partition portions of the prepared honeycomb segment was 50%, and the average pore size of the partition portions was 15 $\mu$m. The porosity and the average pore size of the partition portions were measured with a mercury porosimeter (manufactured by Micromeritics Instrument Corporation, Auto Pore III, Model 9405).

[Step of forming trapping layer]

Next, surfaces of cells on the exhaust-gas outlet side of the prepared honeycomb segment were coated with a resin (prepared by mixing "a SpeciFix epoxy resin" manufactured by Struers A/S. and "a SpeciFix-20 curing agent" manufactured by Struers A/S.) so that gas would not easily permeate from inlet cells to outlet cells. Subsequently, a high porosity region forming member was ejected from open ends on the inlet side of the prepared honeycomb segment using an ejector to deposit the particles on partition portions. Carbon black particles having an average particle size of 0.01 $\mu$m were used as the high porosity region forming member. In this step, the high porosity region forming member was ejected into cells in every other row among inlet cells, and the ejection was not conducted in cells in rows disposed between the rows in which ejection was conducted. In this case, since a gas does not easily permeate from the inlet cells to the outlet cells due to the presence of the resin, the high porosity region forming member permeates from the inlet cells into which the ejection was conducted to inlet cells into which the ejection was not conducted. Thus, the high porosity region forming member was deposited on corner partitions constituting corners between inlet cells (between a large cell and a large cell), i.e., corner partitions constituting corners of polygons of inlet cells. The present area of the high porosity region in the total length of the inlet cells, the thickness t2 of the high porosity region, and the porosity of the high porosity region were adjusted by adjusting the flow rate and the amount of volume of the high porosity region forming member. Subsequently, air containing SiC particles having an average particle size smaller than the average pore size of the partitions were supplied from open ends on the exhaust-gas inlet side of the honeycomb segment, and the SiC particles were deposited on surface layers of the partition portions of the cells on the exhaust-gas inlet side while conducting suction from the outlet side of the honeycomb segment. In this case, on each of the partition portions forming corners of the polygons of the inlet cells, the high porosity region forming member is present between the partition portion and the SiC particles. Next, heat treatment was conducted under the conditions of 1,300°C for two hours in an air atmosphere, whereby the high porosity region forming member and the resin were burned out, the SiC particles deposited in the surface layers of the partitions were bound to each other, and the deposited SiC particles were bound to the SiC and Si particles constituting the partitions. By burning out the high porosity region forming member in this manner, a high porosity region can be formed on the partition portion side of corner trapping layers formed on the partition portions constituting corners of the polygons of the inlet cells. The average particle size of raw material particles (such as the partition portion, the trapping layer, and the high porosity region forming member) is a median size (D50) measured with a laser diffraction/scattering particle size distribution analyzer (manufactured by HORIBA, Ltd., LA-910) using water as a dispersion medium.

Step of Forming Honeycomb Filter

A binder slurry prepared by kneading alumina silicate fiber, colloidal silica, poly(vinyl alcohol), SiC, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure.

Catalyst Loading step

Raw materials of alumina:platinum:ceria-based material = 7:0.5:2.5 based on the weight ratio, in which the ceria-based material was Ce:Zr:Pr:Y:Mn = 60:20:10:5:5 based on the weight ratio, were mixed to prepare an aqueous catalyst slurry. The outlet end face (exhaust gas outlet side) of the honeycomb segment was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of honeycomb filter was 30 g/L.

(Measurement of length ratio N, thicknesses t1 and t2, and porosities A and B)

Forty samples for observation each having a cross section perpendicular to a direction in which a fluid flows were obtained by dividing 147 mm, which is calculated by subtracting a sealing depth (5 mm) from a total length 152 mm of a honeycomb filter, into 40 equal portions (3.675 mm pitch). In a cross section of each of the samples for observation, arbitrary five points including a central point in the cross section and four points located on the left, right, top, and bottom of the central point were cut out, as observation surfaces, from the sample for observation. SEM observation of each of the observation surfaces was conducted, and SEM images were obtained. Each of the observation surfaces was selected so as to include the central axis of a corner trapping layer 24b on the cross section orthogonal to the flow path of a cell. The length ratio N was determined by the method described above. The cross section closest to a position shifted toward the upstream side by 10% of the total length from the downstream side (sealed end side) was the cross section of, among the 40 samples, the fourth sample for observation from the downstream side. Therefore, the thicknesses t1 and t2 and the porosities A and B of this sample for observation were determined and used as the thicknesses t1 and t2 and the porosities A and B of the honeycomb filter that was a target of the measurement. Each of the values of the thicknesses t1 and t2 and the porosity B was measured by the method described above on the observation surfaces of the five points of this sample for observation, and determined as an average. The porosity A was determined as follows. First, observation surfaces of arbitrary five points including a central point in the cross section of this sample for observation and four points located on the left, right, top, and bottom of the central point were selected so that each of the observation surfaces included a side trapping layer. The porosity of the side trapping layer of each observation surface was measured by the method described above, and the porosity A was determined as an average thereof. The thickness t and the thickness ratio T were determined on the basis of the thicknesses t1 and t2. The porosity ratio F was determined on the basis of the porosities A and B.

(Experimental Examples 1 to 8)

In Experimental Examples 1 to 8, honeycomb filters having various length ratios N were prepared. A honeycomb filter which had a thickness t of 60 $\mu$m, a length ratio N of 42%, a thickness ratio T of 20%, a porosity A of 61%, a porosity B of 85%, and a porosity ratio F of 40% and had a high porosity region formed on the corner partition side of a corner trapping layer by conducting the steps described above was prepared as Experimental Example 1 (see Fig. 2). A honeycomb filter of Experimental Example 2 was obtained through the same steps as those in Experimental Example 1 except that the length ratio N was changed to 40%. A honeycomb filter of Experimental Example 3 was obtained through the same steps as those in Experimental Example 1 except that the length ratio N was changed to 35%. A honeycomb filter of Experimental Example 4 was obtained through the same steps as those in Experimental Example 1 except that the length ratio N was changed to 30%. A honeycomb filter of Experimental Example 5 was obtained through the same steps as those in Experimental Example 1 except that the length ratio N was changed to 20%. A honeycomb filter of Experimental Example 6 was obtained through the same steps as those in Experimental Example 1 except that the length ratio N was changed to 10%. A honeycomb filter of Experimental Example 7 was obtained through the same steps as those in Experimental Example 1 except that the length ratio N was changed to 5%. A honeycomb filter of Experimental Example 8 was obtained through the same steps as those in Experimental Example 1 except that the length ratio N was changed to 3%. Since the length ratio N of Experimental Example 7 was 5% (< 10%), the thicknesses t1 and t2 and the porosities A and B were determined on a cross section of a sample for observation, the sample being closest to a position shifted toward the upstream side by 5% of the total length from the downstream side (sealed end side) (among 40 samples, the second sample for observation from the downstream side). Similarly, since the length ratio N of Experimental Example 8 was 3% (< 10%), the thicknesses t1 and t2 and the porosities A and B were determined on a cross section of, among 40 samples, the first sample for observation from the downstream side.

(Experimental Examples 9 to 16)

In Experimental Examples 9 to 16, honeycomb filters having various thickness ratios T were prepared. A honeycomb filter having a thickness t of 60 $\mu$m, a length ratio N of 30%, a thickness ratio T of 42%, a porosity A of 61%, a porosity B of 85%, and a porosity ratio F of 40% was prepared as Experimental Example 9. A honeycomb filter of Experimental Example 10 was obtained through the same steps as those in Experimental Example 9 except that the thickness ratio T was changed to 40%. A honeycomb filter of Experimental Example 11 was obtained through the same steps as those in Experimental Example 9 except that the thickness ratio T was changed to 35%. A honeycomb filter of Experimental Example 12 was obtained through the same steps as those in Experimental Example 9 except that the thickness ratio T was changed to 30%. A honeycomb filter of Experimental Example 13 was obtained through the same steps as those in Experimental Example 9 except that the thickness ratio T was changed to 25%. A honeycomb filter of Experimental Example 14 was obtained through the same steps as those in Experimental Example 9 except that the thickness ratio T was changed to 20%. A honeycomb filter of Experimental Example 15 was obtained through the same steps as those in Experimental Example 9 except that the thickness ratio T was changed to 10%. A honeycomb filter of Experimental Example 16 was obtained through the same steps as those in Experimental Example 9 except that the thickness ratio T was changed to 5%.

(Experimental Examples 17 to 22)

In Experimental Examples 17 to 22, honeycomb filters having various porosity ratios F were prepared. A honeycomb filter having a thickness t of 60 $\mu$m, a length ratio N of 30%, a thickness ratio T of 20%, a porosity A of 61%, a porosity B of 100%, and a porosity ratio F of 64% was prepared as Experimental Example 17. A honeycomb filter of Experimental Example 18 was obtained through the same steps as those in Experimental Example 17 except that the porosity B was changed to 92% and the porosity ratio F was changed to 50%. A honeycomb filter of Experimental Example 19 was obtained through the same steps as those in Experimental Example 17 except that the porosity B was changed to 79% and the porosity ratio F was changed to 30%. A honeycomb filter of Experimental Example 20 was obtained through the same steps as those in Experimental Example 17 except that the porosity B was changed to 67% and the porosity ratio F was changed to 10%. A honeycomb filter of Experimental Example 21 was obtained through the same steps as those in Experimental Example 17 except that the porosity B was changed to 64% and the porosity ratio F was changed to 5%. A honeycomb filter of Experimental Example 22 was obtained through the same steps as those in Experimental Example 17 except that the porosity B was changed to 61%, the porosity ratio F was changed to 0%, and the high porosity region was not formed without depositing the high porosity region forming member.

(Experimental Examples 23 to 26)

In Experimental Examples 23 to 26, honeycomb filters in which the porosity ratio F was maintained to a fixed value of 40% and the porosities A and B were changed were prepared. A honeycomb filter having a thickness t of 60 $\mu$m, a length ratio N of 30%, a thickness ratio T of 20%, a porosity A of 50%, a porosity B of 70%, and a porosity ratio F of 40% was prepared as Experimental Example 23. A honeycomb filter of Experimental Example 24 was obtained through the same steps as those in Experimental Example 23 except that the porosity A was changed to 55% and the porosity B was changed to 77%. A honeycomb filter of Experimental Example 25 was obtained through the same steps as those in Experimental Example 23 except that the porosity A was changed to 65% and the porosity B was changed to 91%. A honeycomb filter of Experimental Example 26 was obtained through the same steps as those in Experimental Example 23 except that the porosity A was changed to 70% and the porosity B was changed to 98%.

(Experimental Examples 27 to 29)

In Experimental Examples 27 to 29, honeycomb filters having various thickness t were prepared. A honeycomb filter having a thickness t of 80 $\mu$m, a length ratio N of 30%, a thickness ratio T of 20%, a porosity A of 61%, a porosity B of 85%, and a porosity ratio F of 40% was prepared as Experimental Example 27. A honeycomb filter of Experimental Example 28 was obtained through the same steps as those in Experimental Example 27 except that the thickness t was changed to 40$\mu$m. A honeycomb filter of Experimental Example 29 was obtained through the same steps as those in Experimental Example 27 except that the thickness t was changed to 20$\mu$m.

Experimental Examples 1 to 8 and 10 to 21 and 23 to 29 correspond to Examples, Experimental Example 9 corresponds to a Reference Example outside the scope of the claims and Experimental Example 22 corresponds to Comparative Example. Table 1 summarizes the measurement results of Experimental Examples 1 to 29 and test results described below.

[Table 1]

| Experimental example No. | Thickness t [μm] | Length ratio N [%] | Thickness ratioT [%] | Porosity A [%] | Porosity B [%] | Porosity ratio F [%] | Detachment of trapping layer (※1) | Pressure loss after PM deposition [kPa] | Purification efficiency after durability test [%] | Regeneration threshold [g/L] |
|---|---|---|---|---|---|---|---|---|---|---|
| 1 | 60 | 42 | 20 | 61 | 85 | 40 | ○ | 5.1 | 69 | 18 |
| 2 | 60 | 40 | 20 | 61 | 85 | 40 | ○ | 4.7 | 76 | 18 |
| 3 | 60 | 35 | 20 | 61 | 85 | 40 | ○ | 4.1 | 80 | 18 |
| 4 | 60 | 30 | 20 | 61 | 85 | 40 | ○ | 3.9 | 82 | 18 |
| 5 | 60 | 20 | 20 | 61 | 85 | 40 | ○ | 4.0 | 82 | 18 |
| 6 | 60 | 10 | 20 | 61 | 85 | 40 | ○ | 4.2 | 81 | 18 |
| 7 | 60 | 5 | 20 | 61 | 85 | 40 | ○ | 4.5 | 78 | 18 |
| 8 | 60 | 3 | 20 | 61 | 85 | 40 | ○ | 5.4 | 62 | 18 |
| 9 | 60 | 30 | 42 | 61 | 85 | 40 | × | 4.0 | 81 | - |
| 10 | 60 | 30 | 40 | 61 | 85 | 40 | ○ | 4.0 | 81 | 18 |
| 11 | 60 | 30 | 35 | 61 | 85 | 40 | ○ | 4.0 | 81 | 18 |
| 12 | 60 | 30 | 30 | 61 | 85 | 40 | ○ | 4.0 | 81 | 18 |
| 13 | 60 | 30 | 25 | 61 | 85 | 40 | ○ | 4.0 | 81 | 18 |
| 14 | 60 | 30 | 20 | 61 | 85 | 40 | ○ | 4.1 | 80 | 18 |
| 15 | 60 | 30 | 10 | 61 | 85 | 40 | ○ | 4.4 | 78 | 17 |
| 16 | 60 | 30 | 5 | 61 | 85 | 40 | ○ | 5.2 | 64 | 15 |
| 17 | 60 | 30 | 20 | 61 | 100 | 64 | ○ | 4.1 | 81 | 18 |
| 18 | 60 | 30 | 20 | 61 | 92 | 50 | ○ | 4.1 | 81 | 18 |
| 19 | 60 | 30 | 20 | 61 | 79 | 30 | ○ | 4.1 | 80 | 18 |
| 20 | 60 | 30 | 20 | 61 | 67 | 10 | ○ | 4.2 | 78 | 18 |
| 21 | 60 | 30 | 20 | 61 | 64 | 5 | ○ | 4.7 | 76 | 17 |
| 22 | 60 | - | 0 | 61 | 61 | 0 | ○ | 5.7 | 59 | 14 |
| 23 | 60 | 30 | 20 | 50 | 70 | 40 | ○ | 3.9 | 82 | 18 |
| 24 | 60 | 30 | 20 | 55 | 77 | 40 | ○ | 3.9 | 82 | 18 |

EP 2 614 873 B1

| Experimental example No. | Thickness t [$\mu$m] | Length ratio N [%] | Thickness ratioT [%] | Porosity A [%] | Porosity B [%] | Porosity ratio F [%] | Detachment of trapping layer (※1) | Pressure loss after PM deposition [kPa] | Purification efficiency after durability test [%] | Regeneration threshold [g/L] |
|---|---|---|---|---|---|---|---|---|---|---|
| 25 | 60 | 30 | 20 | 65 | 91 | 40 | ○ | 3.9 | 82 | 18 |
| 26 | 60 | 30 | 20 | 70 | 98 | 40 | ○ | 3.9 | 82 | 18 |
| 27 | 80 | 30 | 20 | 61 | 85 | 40 | ○ | 3.9 | 82 | 18 |
| 28 | 40 | 30 | 20 | 61 | 85 | 40 | ○ | 3.9 | 82 | 18 |
| 29 | 20 | 30 | 20 | 61 | 85 | 40 | ○ | 3.9 | 82 | 18 |
| ※1: ○: No detachment was observed ×: Detachment was observed | | | | | | | | | | |

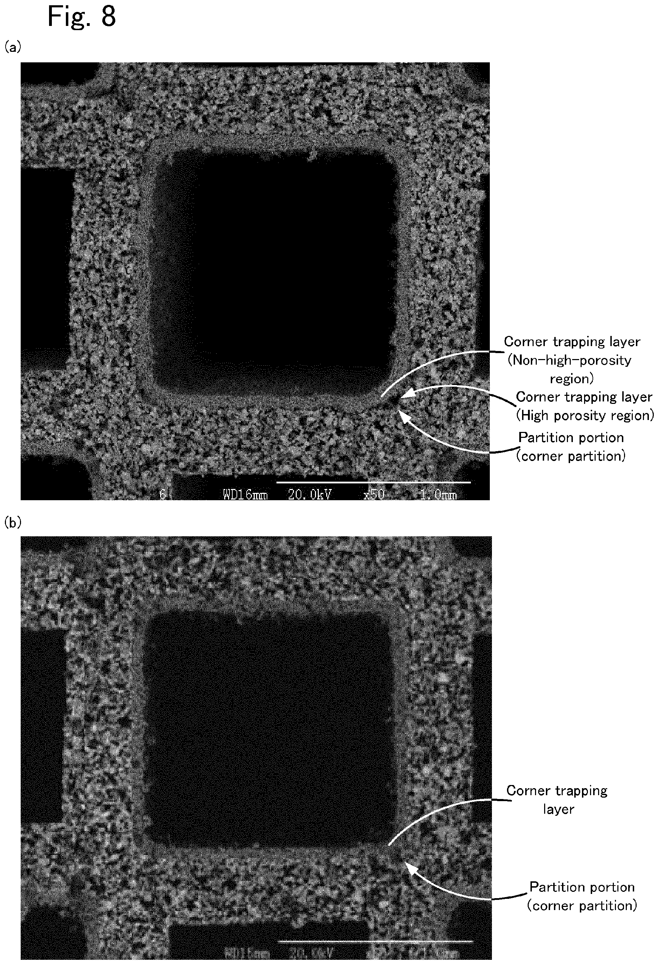

Fig. 8 includes cross-sectional photographs of inlet cells (large cells) of, among 40 samples for observation, the fourth samples for observation from the downstream side in the honeycomb filters of Experimental Examples 4 and 22. Fig. 8(a) is a photograph of Experimental Example 4. Fig. 8(b) is a photograph of Experimental Example 22. As shown in Fig. 8, in Experimental Example 4, a high porosity region was formed on the corner partition side of a corner trapping layer. In contrast, in Experimental Example 22, deposition of the high porosity region forming member was not conducted, and thus the high porosity region was not formed.

[Trapping layer detachment test]

First, a honeycomb filter was dried at 120°C for two hours, and the weight of the honeycomb filter was then measured. Air blow was then conducted from each of end faces on the inlet side and outlet side of the honeycomb filter using an air gun (air gun caliber: 3 mm) at a pressure of 0.4 MPa. Subsequently, the honeycomb filter was again dried at 120°C for two hours, and the weight of the honeycomb filter was measured. The weight before the air blow and the weight after the air blow were compared. When the decrease in the weight was 0.1 g or more, it was evaluated that detachment of a trapping layer occurred. When the decrease in the weight was less than 0.1 g, it was evaluated that detachment of a trapping layer did not occur.

[Pressure loss test after PM deposition]

A honeycomb filter was installed in a 2.2-L diesel engine. While PM was deposited in a steady state at an engine speed of 2,500 rpm and a torque of 45 Nm, the pressure loss behavior was observed. The weight of the honeycomb filter was measured before and after the engine test. The amount of PM deposits in the test was calculated by subtracting the weight of the honeycomb filter before the test from the weight of the honeycomb filter after the test. The pressure loss in relation to the amount of PM deposits was determined on the assumption that PM was generated at a constant rate. As for the performance evaluation of the honeycomb filter, the pressure loss at a PM deposition of 4 g/L was defined as a pressure loss after PM deposition.

[Purification efficiency test after durability test]

The purification efficiency by a catalyst after a regeneration treatment was repeated was evaluated. PM was deposited up to 8 g/L using the same engine and under the same conditions as those in the above-described pressure loss test after PM deposition, and the deposited PM was then burned by post-injection. This test was repeated 50 times as a regeneration test. Subsequently, the honeycomb filter was cooled at room temperature, installed in the same engine again, and maintained in a steady state at an engine speed of 2,000 rpm and a torque of 45 Nm for five minutes. The HC concentrations of an exhaust gas before and after the exhaust gas flowed through the honeycomb filter were measured to determine an HC purification efficiency. This HC purification efficiency was defined as the purification efficiency after a durability test.

[Regeneration threshold test (Threshold test for trapping layer crack)]

The generation of cracks in abnormal combustion of PM resulting from excess PM deposition was evaluated. In this evaluation, the amount of PM deposition that resulted in a defect in the trapping layer after regeneration treatment to remove an excessive amount of PM, which exceeded a normal amount of PM deposition, by combustion, in other words, the amount of PM deposition in which the PM trapping efficiency began to decrease after the regeneration treatment was defined as a "regeneration threshold", and the regeneration threshold was measured. After a predetermined amount of PM was deposited in a steady state at an engine speed of 2,000 rpm and a torque of 50 Nm, a test was performed in the following PM abnormal combustion mode in which the honeycomb filter had the highest internal temperature. First, while a 2.2-L diesel engine was controlled in a steady state at 2,000 rpm and 50 Nm, the inlet gas temperature of the honeycomb filter was increased to 650°C by post-injection to burn the deposited PM. On the assumption of a mode where a vehicle was stopped when PM was deposited and the pressure loss measured in front and in the rear of the honeycomb filter began to decrease, the post-injection was stopped and the engine was switched to an idle state. This rapidly increases the concentration of oxygen entering the honeycomb filter and causes abnormal combustion of PM deposited in the honeycomb filter. In the case where, for example, the abnormal combustion causes a significant temperature distribution in the honeycomb filter, thereby generating cracking or detachment in the trapping layer, PM trap ability decreases because of the leakage of PM through the defect. Thus, a trapping efficiency after regeneration treatment was compared with a trapping efficiency before regeneration treatment. The trapping efficiency was calculated from the reduction ratio of the PM concentration measured downstream of the honeycomb filter to the PM concentration measured upstream of the honeycomb filter.

The PM concentrations on the upstream side and the downstream side of the honeycomb filter were measured with a scanning mobility particle sizer (SMPS). The amount of PM deposited in the PM abnormal combustion mode test was increased in increments of 0.5 g/L. The amount of PM deposition when the trapping efficiency after the test becomes lower than that before the test was considered to be the regeneration threshold value of the honeycomb filter for evaluation.

(Experimental results)

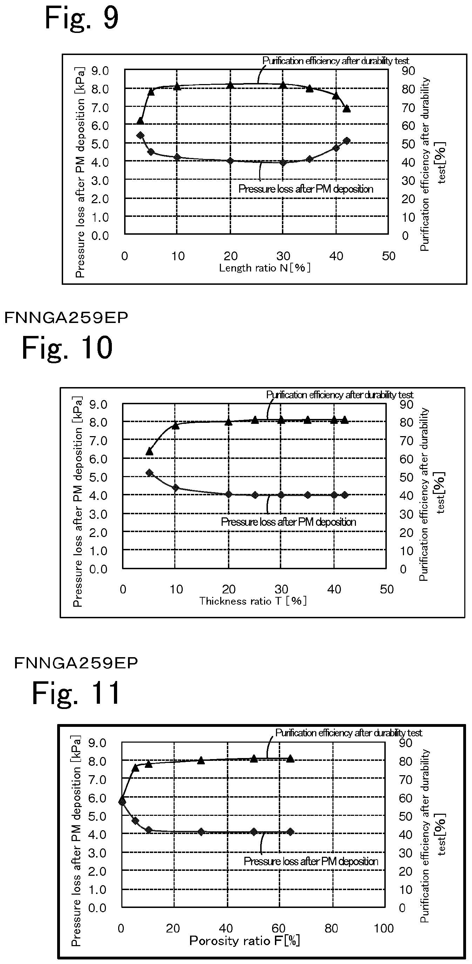

Table 1 summarizes the test results of Experimental Examples 1 to 29. Fig. 9 is a plot of the test results of Experimental Examples 1 to 8, and shows the measurement results of the pressure loss (kPa) after PM deposition and the purification efficiency (%) after the durability test as a function of the length ratio N (%). Fig. 10 is a plot of the test results of Experimental Examples 9 to 16, and shows the measurement results of the pressure loss (kPa) after PM deposition and the purification efficiency (%) after the durability test as a function of the thickness ratio T (%). Fig. 11 is a plot of the test results of Experimental Examples 17 to 22, and shows the measurement results of the pressure loss (kPa) after PM deposition and the purification efficiency (%) after the durability test as a function of the porosity ratio F (%).

As shown in Table 1, in each of Experimental Examples 1 to 21 and 23 to 29, the pressure loss after PM deposition was lower and the purification efficiency after the durability test was higher than those in Experimental Example 22. In Experimental Examples 1 to 8, 10 to 21, and 23 to 29 excluding Experimental Example 9 in which detachment of the trapping layer occurred, the regeneration threshold was higher than that in Experimental Example 22. The reason for the high purification efficiency after the durability test is believed to be as follows. In the honeycomb filters of Examples, since a corner trapping layer has a high porosity region, pressure loss in the corner trapping layer is further decreased in a state where PM is deposited on a side trapping layer. It is believed that the flow rate in the corner trapping layer in the state where PM is deposited is therefore increased as compared with a case where the corner trapping layer does not have the high porosity region, and thus a catalyst loaded on a partition between large-large cells, the partition including a corner partition of a partition portion, can be more effectively used. It is believed that, consequently, degradation of the purification efficiency due to the catalyst could be further suppressed even after the regeneration treatment, in which solid components on the trapping layer were removed by combustion, was repeated.

Referring to Experimental Examples 1 to 8 shown in Table 1 and Fig. 9, it was found that, in the case where the value of the length ratio N was 5% or more, the pressure loss after PM deposition was lower and the purification efficiency after the durability test was higher than those in the case where the value of the length ratio N was 3%. It was also found that the value of the length ratio N is preferably 10% or more, more preferably 20% or more, and still more preferably 30% or more. The test results of Experimental Example 1 showed that when the high porosity region was present in a range of more than 40% of the total length from the sealed end of a large cell, the pressure loss after PM deposition increased and the purification efficiency after the durability test decreased. The reason for this is believed to be as follows. In Experimental Examples 1 to 29, the catalyst was loaded on the partition portion by injecting a catalyst slurry from an end on the opening side of a small cell and conducting suction from an end on the opening side of a large cell. When a catalyst is loaded in this manner, the flow rate of the catalyst slurry passing through a partition portion between a small cell and a large cell is higher at a position closer to the opening side of the large cell. Therefore, when the high porosity region having a relatively low permeation resistance is present in a region exceeding 40% of the total length, which is a region where the flow rate is high, the catalyst is easily deposited not on the partition portion but on the high porosity region that is close to the opening side, and pores in the trapping layer tend to be clogged with the catalyst. It is believed that, consequently, the pressure loss after PM deposition increased. In addition, since the pressure loss in the trapping layer that is close to the opening side increases, the flow rate of an exhaust gas passing through the downstream side of the large cell relatively increases when the exhaust gas is allowed to be passed. It is believed that, consequently, the exhaust gas easily passed before purification was sufficiently conducted by the catalyst, and the purification efficiency after the durability test also decreased.

Referring to Experimental Examples 9 to 16 shown in Table 1 and Fig. 10, it was found that honeycomb filters having a lower pressure loss after PM deposition, a higher purification efficiency after the durability test, and a higher regeneration threshold than those of Comparative Example could be obtained by controlling the thickness ratio T to be 5% or more. It was also found that the thickness ratio T is preferably 10% or more, more preferably 20% or more, and still more preferably 25% or more. Furthermore, it was found that detachment of the trapping layer could be prevented by controlling the thickness ratio T to be 40% or less.

Referring to Experimental Examples 17 to 22 shown in Table 1 and Fig. 11, it was found that honeycomb filters having a lower pressure loss after PM deposition, a higher purification efficiency after the durability test, and a higher regeneration threshold than those of Comparative Example could be obtained by controlling the porosity ratio F (%) to be 5% or more. It was also found that the porosity ratio F is preferably 10% or more, more preferably 30% or more, and still more preferably 50% or more.

Referring to Experimental Examples 23 to 26 shown in Table 1, it was found that even when the porosity A and the porosity B were different values, the same results were obtained as long as the porosity ratio F was the same value. Referring to Experimental Examples 27 to 29, it was found that even when the thickness t was different, the same results were obtained.

INDUSTRIAL APPLICABILITY

The present invention can suitably be applied to filters for purifying exhaust gases emitted from automobile engines, stationary engines for construction equipment, industrial stationary engines, and combustion equipment.

**Claims**

1.  A honeycomb filter (20) comprising:

    porous partition portions (22) forming a plurality of cells (23), each of the cells (23) being open at one end and sealed at the other end, serving as a flow path of a fluid, and having a polygonal cross section orthogonal to the flow path; and
    a trapping layer (24) for trapping and removing solid components contained in the fluid, the trapping layer (24) including a side trapping layer (24a) disposed on the partition portion (22) that forms a side of a polygon of each of the cells (23) and a corner trapping layer (24b) disposed on the partition portion (22) that forms a corner of the polygon of each of the cells (23),
    wherein the corner trapping layer (24b) has a high porosity region (35b) having a porosity higher than the porosity of the side trapping layer (24a), the high porosity region (35b) being disposed on the partition portion (22) side of the corner trapping layer (24b);
    wherein the thickness of the high porosity region (35b) is more than 0% and 40% or less of the thickness of a region (34b) of the corner trapping layer (24b), the region (34b) being other than the high porosity region (35b).

2.  The honeycomb filter (20) according to Claim 1, wherein a porosity ratio F is 5% or more, the porosity ratio F being calculated by the following formula:

$$F = (B-A)/A \times 100 \ (unit: \%)$$

    wherein a porosity B represents the porosity of the high porosity region (35b) and a porosity A represents the porosity of the side trapping layer (24a).

3.  The honeycomb filter (20) according to Claim 1 or 2, wherein a porosity ratio F is 10% or more, the porosity ratio F being calculated by the following formula:

$$F = (B-A)/A \times 100 \ (unit: \%)$$

    wherein a porosity B represents the porosity of the high porosity region (35b) and a porosity A represents the porosity of the side trapping layer (24a).

4.  The honeycomb filter (20) according to any one of Claims 1 to 3,
    wherein a thickness of the high porosity region (35b) is 5% or more and 40% or less of a thickness of a region (34b) of the corner trapping layer (24b), the region (34b) being other than the high porosity region (35b).

5.  The honeycomb filter (20) according to any one of Claims 1 to 4,
    wherein the region in which the high porosity region (35b) is disposed is represented by a region having a length ratio N, the length ratio N being a ratio of:

    the length from a position closest to the upstream side of the fluid, the position being located in an area where the high porosity region (35b) is provided, to the sealed end on the outlet side
    to
    the total length from the open end of the cell (23) to the sealed end on the outlet side, and
    the length ratio N is a value of more than 0% and 40% or less.

**6.** The honeycomb filter (20) according to any one of Claims 1 to 5,
wherein the region in which the high porosity region (35b) is disposed is represented by a region having a length ratio N, the length ratio N being a ratio of:

the length from a position closest to the upstream side of the fluid, the position being located in an area where the high porosity region (35b) is provided, to the sealed end on the outlet side
to
the total length from the open end of the cell (23) to the sealed end on the outlet side, and
the length ratio N is a value of 3% or more and 40% or less.

**7.** The honeycomb filter (20) according to any one of Claims 1 to 6,
wherein the region in which the high porosity region (35b) is disposed is represented by a region having a length ratio N, the length ratio N being a ratio of:

the length from a position closest to the upstream side of the fluid, the position being located in an area where the high porosity region (35b) is provided, to the sealed end on the outlet side
to
the total length from the open end of the cell (23) to the sealed end on the outlet side, and
the length ratio N is a value of 5% or more and 35% or less.

**8.** The honeycomb filter (20) according to any one of Claims 1 to 7,
wherein the partition portions (22), the trapping layer (24), or the partition portions (22) and the trapping layer (24) are loaded with a catalyst.

**9.** The honeycomb filter (20) according to any one of Claims 1 to 8,
wherein the partition portions (22) form a plurality of first cells (23), which are the cells (23) previously defined, and a plurality of second cells (25), the second cells (25) each being sealed at one end and open at the other end and serving as a flow path of a fluid, such that the first cells (23) and the second cells (25) are sealed at opposite ends, the first and second cells (23, 25) being adjacent to each other with portions of the partition portions (22) disposed therebetween, the portions forming the sides of polygons of the first cells (23).

**10.** The honeycomb filter (20) according to Claim 9,
wherein the first cells (23) each have an opening area of the one end larger than an opening area of the other end of each of the second cells (25).


**Patentansprüche**

**1.** Wabenfilter (20), der Folgendes umfasst:

poröse Trennabschnitte (22), die eine Vielzahl von Zellen (23) bilden, wobei jede der Zellen (23) an einem Ende offen ist und am anderen Ende verschlossen ist, und die als Strömungspfad für ein Fluid dienen und normal auf den Strömungspfad einen polygonalen Querschnitt aufweisen; und
eine Einfangschicht (24) zum Einfangen und Entfernen von festen Komponenten, die in dem Fluid enthalten sind, wobei die Einfangschicht (24) eine Seiteneinfangschicht (24a), die auf dem Trennabschnitt (22) angeordnet ist, der eine Seite eines Polygons jeder der Zellen (23) bildet, und eine Eckeinfangschicht (24b), die auf dem Trennabschnitt (22) angeordnet ist, der eine Ecke des Polygons jeder der Zellen (23) bildet,
wobei die Eckeinfangschicht (24b) eine Region mit hoher Porosität (35b) aufweist, die eine Porosität aufweist, die höher ist als die Porosität der Seiteneinfangschicht (24a), wobei die Region mit hoher Porosität (35b) auf der Seite des Trennabschnitts (22) der Eckeinfangschicht (24b) angeordnet ist;
wobei die Dicke der Region mit hoher Porosität (35b) mehr als 0 % und 40 % oder weniger der Dicke einer Region (34b) der Eckeinfangschicht (24b) ist, wobei die Region (34b) eine andere ist als die Region mit hoher Porosität (35b).

**2.** Wabenfilter (20) nach Anspruch 1, wobei ein Porositätsanteil F 5 % oder mehr beträgt, wobei der Porositätsanteil F anhand der nachstehenden Formel berechnet wird:

$$F = (B-A)/A \times 100 \text{ (Einheit: \%)}$$

wobei eine Porosität B für die Porosität der Region mit hoher Porosität (35b) steht und eine Porosität A für die Porosität der Seiteneinfangschicht (24a) steht.

3. Wabenfilter (20) nach Anspruch 1 oder 2, wobei der Porositätsanteil F 10 % oder mehr beträgt, wobei der Porositätsanteil F anhand der nachstehenden Formel berechnet wird:

$$F = (B-A)/A \times 100 \text{ (Einheit: \%)}$$

wobei eine Porosität B für die Porosität der Region mit hoher Porosität (35b) steht und eine Porosität A für die Porosität der Seiteneinfangschicht (24a) steht.

4. Wabenfilter (20) nach einem der Ansprüche 1 bis 3,
wobei eine Dicke der Region mit hoher Porosität (35b) 5 % oder mehr und 40 % oder weniger einer Dicke einer Region (34b) der Eckeinfangschicht (24b) ist, wobei die Region (34b) eine andere ist als die Region mit hoher Porosität (35b).

5. Wabenfilter (20) nach einem der Ansprüche 1 bis 4,
wobei die Region, in der die Region mit hoher Porosität (35b) angeordnet ist, durch eine Region dargestellt ist, die ein Längenverhältnis N aufweist, wobei das Längenverhältnis N folgendes Verhältnis ist:

die Länge von einer Position, die der stromaufwärts gelegenen Seite des Fluids am nächsten ist, wobei die Position in einem Bereich angeordnet ist, in dem die Region mit hoher Porosität (35b) bereitgestellt ist, zu dem verschlossenen Ende an der Auslassseite
zu
der Gesamtlänge von dem offenen Ende der Zelle (23) zu dem verschlossenen Ende der Auslassseite, und das Längenverhältnis N ein Wert von mehr als 0 % und 40 % oder weniger ist.

6. Wabenfilter (20) nach einem der Ansprüche 1 bis 5,
wobei die Region, in der die Region mit hoher Porosität (35b) angeordnet ist, durch eine Region dargestellt ist, die ein Längenverhältnis N aufweist, wobei das Längenverhältnis N folgendes Verhältnis ist:

die Länge von einer Position, die der stromaufwärts gelegenen Seite des Fluids am nächsten ist, wobei die Position in einem Bereich angeordnet ist, in dem die Region mit hoher Porosität (35b) bereitgestellt ist, zu dem verschlossenen Ende an der Auslassseite
zu
der Gesamtlänge von dem offenen Ende der Zelle (23) zu dem verschlossenen Ende der Auslassseite, und das Längenverhältnis N ein Wert von mehr als 3 % oder mehr und 40 % oder weniger ist.

7. Wabenfilter (20) nach einem der Ansprüche 1 bis 6,
wobei die Region, in der die Region mit hoher Porosität (35b) angeordnet ist, durch eine Region dargestellt ist, die ein Längenverhältnis N aufweist, wobei das Längenverhältnis N folgendes Verhältnis ist:

die Länge von einer Position, die der stromaufwärts gelegenen Seite des Fluids am nächsten ist, wobei die Position in einem Bereich angeordnet ist, in dem die Region mit hoher Porosität (35b) bereitgestellt ist, zu dem verschlossenen Ende an der Auslassseite
zu
der Gesamtlänge von dem offenen Ende der Zelle (23) zu dem verschlossenen Ende der Auslassseite, und das Längenverhältnis N ein Wert von mehr als 5 % oder mehr und 35 % oder weniger ist.

8. Wabenfilter (20) nach einem der Ansprüche 1 bis 7,
wobei die Trennabschnitte (22) oder die Einfangschicht (24) oder die Trennabschnitte (22) und die Einfangschicht (24) mit einem Katalysator beladen sind.

9. Wabenfilter (20) nach einem der Ansprüche 1 bis 8,

wobei die Trennabschnitte (22) eine Vielzahl von ersten Zellen (23), die die zuvor definierten Zellen (23) sind, und eine Vielzahl von zweiten Zellen (25) bilden, wobei die zweiten Zellen (25) jeweils an einem Ende verschlossen sind und am anderen Ende offen sind und als Strömungspfad für ein Fluid dienen, so dass die ersten Zellen (23) und die zweiten Zellen (25) an entgegengesetzten Enden verschlossen sind, wobei die ersten und die zweiten Zellen (23, 25) benachbart zueinander vorliegen, wobei Abschnitte der Trennabschnitte (22) dazwischen angeordnet sind, wobei die Abschnitte die Seiten der Polygone der ersten Zellen (23) bilden.

10. Wabenfilter (20) nach Anspruch 9, wobei die ersten Zellen (23) jeweils eine Öffnungsfläche des einen Endes aufweisen, die größer ist als eine Öffnungsfläche des anderen Endes jeder der zweiten Zellen (25).

**Revendications**

1. Filtre en nid d'abeilles (20) comprenant :

   des parties de séparation poreuses (22) formant une pluralité de cellules (23), chacune des cellules (23) étant ouverte à une extrémité et scellée à l'autre extrémité, servant de trajet d'écoulement d'un fluide et présentant une section transversale polygonale orthogonale au trajet d'écoulement ; et
   une couche de piégeage (24) pour piéger et éliminer des composants solides contenus dans le fluide, la couche de piégeage (24) incluant une couche de piégeage latérale (24a) disposée sur la partie de séparation (22) qui forme un côté d'un polygone de chacune des cellules (23) et une couche de piégeage d'angle (24b) disposée sur la partie de séparation (22) qui forme un angle du polygone de chacune des cellules (23),
   dans lequel la couche de piégeage d'angle (24b) présente une région de porosité élevée (35b) présentant une porosité supérieure à la porosité de la couche de piégeage latérale (24a), la région de porosité élevée (35b) étant disposée sur le côté partie de séparation (22) de la couche de piégeage d'angle (24b) ;
   dans lequel l'épaisseur de la région de porosité élevée (35b) est supérieure à 0 % et de 40 % ou moins de l'épaisseur d'une région (34b) de la couche de piégeage d'angle (24b), la région (34b) étant autre que la région de porosité élevée (35b).

2. Filtre en nid d'abeilles (20) selon la revendication 1,
   dans lequel un rapport de porosité F est de 5 % ou plus, le rapport de porosité F étant calculé par la formule suivante :

$$F = (B - A)/A \times 100 \text{ (unité : \%)}$$

   dans lequel une porosité B représente la porosité de la région de porosité élevée (35b) et une porosité A représente la porosité de la couche de piégeage latérale (24a) .

3. Filtre en nid d'abeilles (20) selon la revendication 1 ou 2,
   dans lequel un rapport de porosité F est de 10 % ou plus, le rapport de porosité F étant calculé par la formule suivante :

$$F = (B - A)/A \times 100 \text{ (unité : \%)}$$

   dans lequel une porosité B représente la porosité de la région de porosité élevée (35b) et une porosité A représente la porosité de la couche de piégeage latérale (24a) .

4. Filtre en nid d'abeilles (20) selon l'une quelconque des revendications 1 à 3,
   dans lequel une épaisseur de la région de porosité élevée (35b) est de 5 % ou plus et de 40 % ou moins d'une épaisseur d'une région (34b) de la couche de piégeage d'angle (24b), la région (34b) étant autre que la région de porosité élevée (35b).

5. Filtre en nid d'abeille (20) selon l'une quelconque des revendications 1 à 4,
   dans lequel la région dans laquelle la région de porosité élevée (35b) est disposée est représentée par une région présentant un rapport de longueur N, le rapport de longueur N étant un rapport de :

   la longueur depuis une position la plus proche du côté amont du fluide, la position étant située dans une zone où la région de porosité élevée (35b) est prévue, jusqu'à l'extrémité scellée sur le côté sortie

sur

la longueur totale depuis l'extrémité ouverte de la cellule (23) jusqu'à l'extrémité scellée sur le côté sortie, et le rapport de longueur N est une valeur supérieure à 0 % et de 40 % ou moins.

6. Filtre en nid d'abeilles (20) selon l'une quelconque des revendications 1 à 5,
dans lequel la région dans laquelle la région de porosité élevée (35b) est disposée est représentée par une région présentant un rapport de longueur N, le rapport de longueur N étant un rapport de :

la longueur depuis une position la plus proche du côté amont du fluide, la position étant située dans une zone où la région de porosité élevée (35b) est prévue, jusqu'à l'extrémité scellée sur le côté sortie.
sur
la longueur totale depuis l'extrémité ouverte de la cellule (23) jusqu'à l'extrémité scellée sur le côté sortie, et le rapport de longueur N est une valeur de 3 % ou plus et de 40 % ou moins.

7. Filtre en nid d'abeilles (20) selon l'une quelconque des revendications 1 à 6,
dans lequel la région dans laquelle la région de porosité élevée (35b) est disposée est représentée par une région présentant un rapport de longueur N, le rapport de longueur N étant un rapport de :

la longueur depuis une position la plus proche du côté amont du fluide, la position étant située dans une zone où la région de porosité élevée (35b) est prévue, jusqu'à l'extrémité scellée sur le côté sortie.
sur
la longueur totale depuis l'extrémité ouverte de la cellule (23) jusqu'à l'extrémité scellée sur le côté sortie, et le rapport de longueur N est une valeur de 5 % ou plus et de 35 % ou moins.

8. Filtre en nid d'abeilles (20) selon l'une quelconque des revendications 1 à 7,
dans lequel les parties de séparation (22), la couche de piégeage (24), ou les parties de séparation (22) et la couche de piégeage (24) sont chargés avec un catalyseur.

9. Filtre en nid d'abeilles (20) selon l'une quelconque des revendications 1 à 8,
dans lequel les parties de séparation (22) forment une pluralité de premières cellules (23), qui sont les cellules (23) préalablement définies, et une pluralité de secondes cellules (25), les secondes cellules (25) étant chacune scellées à une extrémité et ouvertes à l'autre extrémité et servant de trajet d'écoulement d'un fluide, de telle sorte que les premières cellules (23) et les secondes cellules (25) sont scellées à des extrémités opposées, les première et seconde cellules (23, 25) étant mutuellement adjacentes avec des parties des parties de séparation (22) disposées entre elles, les parties formant les côtés de polygones des premières cellules (23).

10. Filtre en nid d'abeilles (20) selon la revendication 9,
dans lequel les premières cellules (23) ont chacune une zone d'ouverture de la première extrémité plus grande qu'une zone d'ouverture de l'autre extrémité de chacune des secondes cellules (25).

# Fig. 1

# Fig. 2

# Fig. 3

23

Upstream side

Direction of the exhaust gas flows

Partition portion 22

Trapping layer 24

Downstream side

26

(100%)

Total length

Length ratio N%

Present area of the high porosity region

Sealed end

## Fig. 4

Hypothetical light

Surface to be irradiated
(Surface of trapping layer)

Surface to be irradiated
(Surface of partition
portion)

Trapping layer 24
(Corner trapping
layer 24b)
Partition portion 22
(Corner partition 22d)

Observation
surface

Central axis

Hypothetical light

Outermost contour
of corner trapping
layer

Non-high-
porosity
region
34b

Corner
trapping
layer 24b

High
porosity
region
35b

Boundary30

Corner partition
22d

Outermost contour
of corner partition

Central axis

Intersection between outermost
contour of corner trapping layer
and central axis

Thickness t of
corner trapping
layer

Thickness
t1

Thickness
t2

Boundary 30

Intersection between
outermost contour of
corner partition and
central axis

Central axis

# Fig. 5

# Fig. 6

## Fig. 7

# Fig. 8

(a)

Corner trapping layer
(Non-high-porosity
region)

Corner trapping layer
(High porosity region)

Partition portion
(corner partition)

(b)

Corner trapping
layer

Partition portion
(corner partition)

## Fig. 9

FNNGA259EP

## Fig. 10

FNNGA259EP

## Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010214335 A

- WO 2011125769 A